# EUROPEAN PATENT APPLICATION

(11) **EP 1 892 893 A1**
(43) Date of publication of application: **27.02.2008**
(21) Application number: 06119458.5
(22) Date of filing: 24.08.2006
(51) Int. Cl.: H04L 12/56, H04L 29/06

(54) **Method and apparatus for quality of service mapping**

(71) Applicant: NTT DoCoMo, Inc., Tokyo (JP)
(72) Inventor: Mendes, Paulo, 81673 München (DE); Cerqueira, Eduardo, 3030-049 Coimbra (PT); Curado, Marilia, 3030-393 Coimbra (PT); Monteiro, Edmundo, 3030-393 Coimbra (PT)
(74) Representative: Betten & Resch

(57) **Abstract**

A method for mapping quality of service in a session, said session comprising one or more flows, each of the flows having associated required QoS parameters. Said session is established through a network comprising a plurality of domains each having defined by a network operator of the domain a set of service classes. The QoS parameters for each individual flow are compared to the sets of service classes and the flows are mapped by a mapping agent in said network to a corresponding service class. Said mapping is performed for each of the network domains.

## Description

### FIELD OF INVENTION

This invention relates to the field of the Quality of Service (QoS) mapping, particularly between sessions and service classes according to the QoS requirements of applications and the available classes of service, independently of the underlying QoS model.

### BACKGROUND OF THE INVENTION

The new applications used in the actual and future Internet have specific Quality of Service requirements and generate traffic with variable characteristics. In order to support the wide range of emerging applications and to guarantee, at least, the minimal quality level desired by the users and the applications, in wired and mobile environments, the service providers must be able to provide a set of service classes to which applications with similar QoS requirements are mapped.

The problem of mapping application level QoS requirements into network service classes at session level has been tackled for situations where the sessions are single-user, where there is a homogeneous class of service environment, and where the sessions can be easily accommodated to an existing class of service (for instance, due to the existence of service classes that support exactly the same QoS requirements as the required by the sessions or classes with abundant network resources). However, future networks are envisioned to be heterogeneous with the co-existence of a variety of groups of service classes, where each class has a dynamic availability of bandwidth resources (e.g. depends on its current usage), and are supported by different QoS models (e.g. Differentiated Services (DiffServ) (see e.g. S. Blake et at, "An Architecture for Differentiated Service", IETF, RFC 2475, December 1998), Integrated Services (IntServ) (see e.g. R. Braden, D. Clark and S. Shenker, "Integrated Services in the Internet Architecture: an overview". IETF, RFC 1633, June 1994), and Universal Mobile Telecommunication System (UMTS) see e.g. 3GPP TS 23.107 V. 4.4.0, "QoS Concepts and Architecture", Technical Report, March 2002.). Moreover, the mobile communications are expected to expand from telephony to publish-subscribe services, such as real-time multimedia, creating the need for the support of multi-user sessions (sessions composed by more than one flow with well-defined priorities).

In such a scenario, there is the need of a mechanism that is able to translate the requirements of single and multi-user sessions into network service classes in a QoS heterogeneous environment. Moreover, when sessions are composed of multiple flows with different importance/priorities (e.g. streaming of scalable video such as MPEG4) and it is not possible to assure QoS for a session or for some flows of that session (session-flows), an adaptive control mechanism should be used in order to adjust the session to the current network conditions.

The problem of QoS mapping has been the subject of previous proposals which aim at mapping the applications requirements into the service classes supported by the network. However, existing schemes lack the consistent support of multi-user sessions and do not take into consideration heterogeneous environments, where there are multiple sets of service classes. Specifically, previous schemes do not include a solution for the mapping of the application requirements into network service classes when the parameters used to specify the requirements do not match the definition of the existing network service classes (see e.g. S. Maniatis et al, "End-to-End QoS Specification Issues in the Converged All-lP Wired and Wireless Environment", IEEE Communication Magazine, pp 80 - 86, Vol. 42, Issue 6, June 2004, Q. Zhang, W. Zhu and Y. Zhang, "End-to-End QoS for Video Delivery Over Wireless Internet", IEEE Communication Magazine, January 2005, and Z. Mammeri, "Approach for End-to-End QoS Mapping and Handling". Wireless and Optical Communication Networks, WOCN 2005. Second IFIP International Conference on, pp 265-269, March 2005). Furthermore, most solutions, such as proposed in D. Zagar, D. Vilendecic and K Mlinaric, "Network resource management for the services with variable QoS requirements", The 6th International Conference on Telecommunications, ConTEL 2003, Vol. 2, lssue 3, June 2003, and in M. El-Gendy et al, "Paving the first mile for QoS-dependent applications and appliances", IWQOS 2004, Twelfth IEEE International Workshop on, June 2004, use a centralised control approach and require the installation of additional modules in the end-systems which severely constrains scalability and increases complexity. In this context, existing solutions fail to do an adequate dynamic mapping of session requirements into network classes of service, since they do not take into consideration the available bandwidth of each class as input to the mapping decision.

### SUMMARY OF THE INVENTION

According to one embodiment there is provided a method for mapping quality of service in a session to be established between a source and a receiver though a network comprising a plurality of domains, whereas the session originating from a source is composed of one or more flows which together form the session, each flow having an associated set of quality of service parameters defining the quality of services requirement for each flow of said session, the network operator of each domain providing a services class list containing a list of a plurality of service classes and categorising the available service classes provided by said network operator for said domain with respect to the quality of service parameters defining the respective service classes, said method comprising:
receiving by a mapping agent in said network about said set of quality of service parameters;
comparing the quality of service parameters defining the quality of services requirement for the individual flows with the service class list by said mapping agent; and mapping each flow by said mapping agent into a service class of the service classes list in accordance with a quality of service mapping policy, whereas based on said service mapping policy each flow is individually mapped to a suitable network class in accordance with the available service classes and the quality of service parameters of said individual flow, wherein
said session passes from said source to a receiver through multiple network domains having different available service classes, and
said mapping is performed for each domain and/or each interdomain connection along the path of a session independently such that for each network domain the mapping to a service class is performed individually.

The individual mapping of the flows of a session considerably improves the flexibility of the approach because a session as a whole may be joined by a receiver and the network then individually maps the individual flows into appropriate service classes. Neither the receiver itself nor the source need to negotiate the QoS level, nor is it necessary to select individual flows for the receiver if possibly the resources are not sufficient.
The individual mapping for network domains along the session path has the effect that depending on the service classes available in different network domains (and possibly also depending on the resources available at the moment) the mapping may lead to different results in the individual domains. In consequence, different users which join the session along different paths through different domains may receive a different quality of service. This is achieved by the network management only, without it being necessary that the receiver takes part in the negotiations.

According to one embodiment said mapping policy tries to map the individual flows to respective service classes such that the quality of service requirements as defined in the quality of service parameters for each flow are fulfilled, and
if a mapping which fulfils all quality of service requirements is not possible, mapping flows of said session into a service class having less high quality of services parameters than required.

The mapping into lower level classes takes into account the non-sufficient resources.

According to one embodiment if a mapping which fulfils all quality of service requirements is not possible, based on the priority assigned to each flow of a session a flow having a higher priority is mapped to a higher service class and a flow having a lower priority is mapped to a service class having a lower priority, or
mapping all flows of the session to the same service class having less high quality of services parameters than required.

The mapping in case of insufficient resources may apply a mapping policy which maps the flows based on their priority. This makes sure that high priority flows are assigned a higher QoS level and are received at higher quality.

On the other hand, the mapping policy may be such that all flows of a session are mapped into the same lower service class. This avoids packet reordering and may still in some circumstances give sufficient quality.

According to one embodiment said mapping is further based on the available resources which are obtained by querying a resource controller in charge of assigning and monitoring available resources.

The querying of a resource controller makes it possible to check whether a mapping which in terms of available service classes would be possible is actually possible in terms of present network load. If not, a suitable other mapping may be chosen.

According to one embodiment said method comprises: defining a quality of service profile by the mapping agent based on the quality of service parameters which were obtained from the source, said quality of service profile being such that it transfers the quality of service parameters into parameters which are in accordance with the parameters used in the list of service classes for classifying the available service classes.

This "decouples" the mapping procedure occurring on the network level from the session level and ensures a separation of network level operations and session level operations.

According to one embodiment the method of one of the preceding claims, wherein the quality of service parameters and/or the quality of service profile comprises one or more of the following:
bit rate, bandwidth guarantee, packet loss, delay and jitter.

According to one embodiment said method comprises:
if a perfect mapping based on the quality of service parameters into a service class of the services class list is not possible, returning an error code and forwarding it to an adaptation mechanism, and
receiving from said adaptation mechanism instructions as to which one of a plurality of available non-perfect mapping methods should be followed.

This allows an external adaptation mechanism to influence the mapping mechanism in case a perfect match is not possible.

According to one embodiment said method comprises:
if a flow branches within a network into two or more different paths such that the flow is through said different paths received by different receivers, mapping said flow separately and independently for each path.

This takes into account that different receivers which receive a flow through the same network domain but through different paths may have different conditions for the mapping.

According to one embodiment there is provided an apparatus for mapping quality of service in a session to be established between a source and a receiver though a network comprising a plurality of domains, whereas the session originating from a source is composed of one or more flows which together form the session, each flow having an associated set of quality of service parameters defining the quality of services requirement for each flow of said session, the network operator of each domain providing a services class list containing a list of a plurality of service classes and categorising the available service classes provided by said network operator for said domain with respect to the quality of service parameters defining the respective service classes, said apparatus comprising:
an interface for receiving information about said set of quality of service parameters;
a mapping unit for comparing the quality of service parameters defining the quality of services requirement for the individual flows with the service class list and for mapping each flow into a service class of the service classes list in accordance with a quality of service mapping policy, whereas based on said service mapping policy each flow is individually mapped to a suitable network class in accordance with the available service classes and the quality of service parameters of said individual flow, wherein
said session passes from said source to a receiver through multiple network domains having different available service classes, and
said mapping unit is provided to perform mapping for each domain and/or each interdomain connection along the path of a session independently such that for each network domain the mapping to a service class is performed individually.

According to one embodiment in each network domain there is provided a mapping unit to perform the mapping for this network domain.

According to one embodiment said mapping policy tries to map the individual flows to respective service classes such that the quality of service requirements as defined in the quality of service parameters for each flow are fulfilled, and
if a mapping which fulfils all quality of service requirements is not possible, mapping flows of said session into a service class having less high quality of services parameters than required.

According to one embodiment if a mapping which fulfils all quality of service requirements is not possible, based on the priority assigned to each flow of a session a flow having a higher priority is mapped to a higher service class and a flow having a lower priority is mapped to a service class having a lower priority, or
mapping all flows of the session to the same service class having less high quality of services parameters than required.

According to one embodiment said mapping is further based on the available resources which are obtained by querying a resource controller in charge of assigning and monitoring available resources.

According to one embodiment there is provided means for defining a quality of service profile by the mapping agent based on the quality of service parameters which were obtained from the source, said quality of service profile being such that it transfers the quality of service parameters into parameters which are in accordance with the parameters used in the list of service classes for classifying the available service classes.

According to one embodiment there is further provided means for if a perfect mapping based on the quality of service parameters into a service class of the services class list is not possible, returning an error code and forwarding it to an adaptation mechanism, and means for receiving from said adaptation mechanism instructions as to which one of a plurality of available non-perfect mapping methods should be followed.

According to one embodiment, if a flow branches within a network into two or more different paths such that the flow is through said different paths received by different receivers, mapping said flow separately and independently for each path.

According to one embodiment there is provided a computer program comprising computer executable code for enabling a computer to carry out a method according to an embodiment of the invention.

### DESCRIPTION OF THE DRAWINGS

Fig. 1 illustrates a session composition to which an embodiment of the invention may be applied.
Fig. 2 illustrates a configuration of an embodiment of the invention.
Figs 3A and 3B illustrate flowcharts of operations of embodiments of the invention.
Fig. 4 illustrates a configuration of a further embodiment of the invention.

### DETAILED DESCRIPTION

In the following the invention will be described by means of exemplary embodiments.

Before explaining embodiments of the invention, some terms used in the following are briefly explained.
- QoS model: a term used to denote a QoS framework or architecture supported by a domain or between domains;
- Session: a session defines the communication between a user (or user agent) and a peer. A session can be composed by a number of flows (1 to N) such that it comprises a set of session-flows. A session may be received by one or more receivers (from 1 to M, M being a natural number)

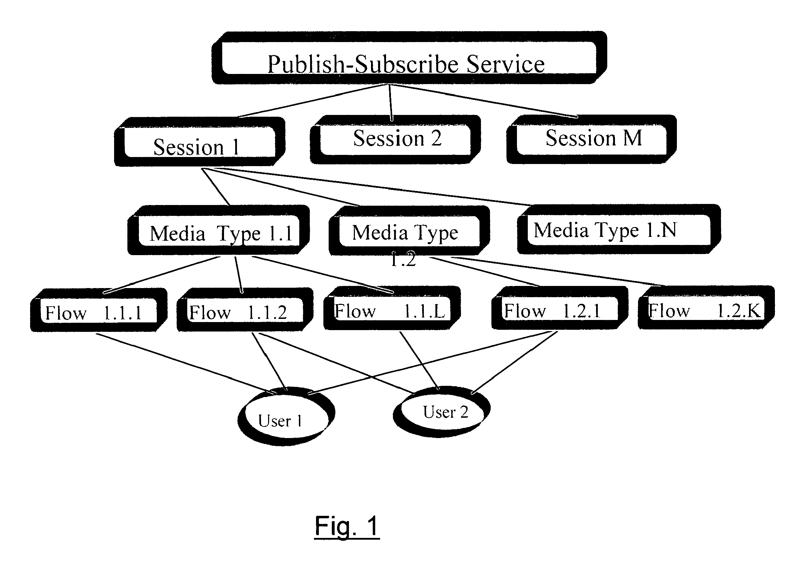

Fig. 1 illustrates an environment in which the invention may be used. A publish-subscribe service may have different multi-user sessions, such as IPTV services having different programs, each corresponding to a session.

Each session may comprise (optionally) multiple media types, such as audio, video, and TV rating.
One media type (e.g. video) then may be comprised of several flows, by using MPEG4 codecs for instance. Users may then individually wish to join a session, as schematically illustrated in Fig. 1.

In the following there will be described a mechanism that does session level QoS mapping from the application QoS requirements into network service classes for single and multi-user sessions in heterogeneous environments (networks with different QoS models). The mapping mechanism operates in an environment which provides the following:
- The sender of a multimedia session defines the session QoS requirements, by using for instance the *Session Description Protocol* (SDP) (see e.g.
- Each receiver gets from the sender by any off-line or on-line mean the QoS description of the available sessions;
- Each receiver sends the QoS description of the sessions it wants to join to an agent in the access network to which the receiver is connected at the time of the session setup.
- The network agent defines a QoS profile of the service requested by the user (wired or mobile). This profile is used to perform the QoS mapping of the application requirements into existing service classes by other network agents that control inter-domain links.
- Operators provide information about the network service classes (including its available bandwidth) supported in each of its domains to the mapping agents controlling inter-domain links.

According to one embodiment there is provided a mapping agent for session mapping (hereinafter referred to as SEMA agent) which is responsible for carrying out a session mapping. The SEMA agent may be a distinct entity in a network, or it may be integrated into another network entity such as a network agent located at the edge of a network and providing access for a receiver or any other device, like other network agents from other networks.

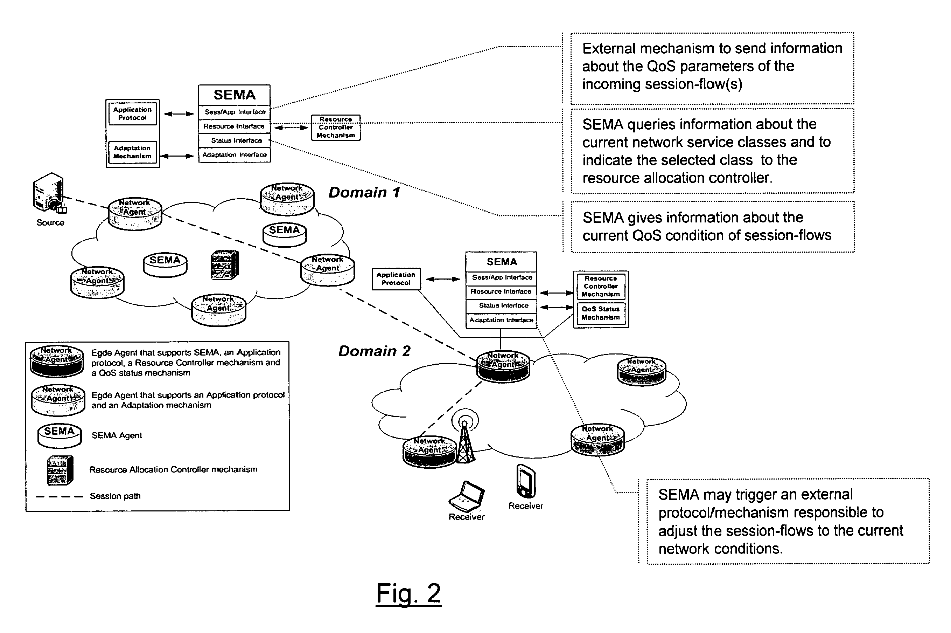

The SEMA agent can be configured to perform QoS mapping at the entry or exit points of a domain. In either of the cases, mapping agents can be associated to a set of edge devices, from one to several. Figure 2 presents an example of a SEMA agent location in a generic scenario, in which *Domain 1* represents a more centralised domain with a central network resource allocation controller and two SEMA agents linked to network edge agents (which support an application protocol and an adaptive control mechanism). In this case, each mapping agent is configured to perform the QoS mapping for a set of inter-domain links. Another example of SEMA location is illustrated in *Domain 2*, which illustrates a complete distributed scenario. In this example the SEMA agent is placed at the edges, co-located with the network agents (which support a mechanism capable of requesting information about the current QoS status of the sessions and a network resource allocation mechanism - which replaces the centralised resource allocation controller in Domain 1). In Domain 2, each SEMA agent is configured to perform the QoS mapping for the inter-domain links associated only to the edge device where it is installed.

The main components of the SEMA agent are the following:
- Interfaces:
   ○ Session/application interface: an external protocol/mechanism uses this interface to trigger the mapping process and to pass to SEMA control information about the QoS parameters of the incoming session-flow(s). When the SEMA agent finishes its job, it uses this same interface to send a response to the requester (e.g. informing about the status of the operation, such as accepted or rejected, and the acquired QoS level). Furthermore, this interface is also used to receive/update information about the population size of each session and/or flows, which may influence the mapping decision;
   ○ Resource allocation controller interface: the SEMA agent uses this interface to query information about the current network service classes available within the network domain or between domains (e.g. based on Service Level Specifications (SLS)), depending if the SEMA agent is controlling ingress or egress links, respectively. This interface is also used to communicate the selected class of service and the bit rate required for each session-flow to the resource allocation controller, independently of the underlying network infrastructure;
   ○ Status interface: this interface is used to give information about the current QoS condition of session-flows to a protocol/mechanism. For instance, this information can be used to give support for mobility decisions;
   ○ Adaptation mechanism interface: This interface is used to trigger an external protocol/mechanism responsible to adjust the quality level of the sessions to the current network conditions;
   ○ the aforementioned interfaces are schematically illustrated in Fig. 2 above the illustration of Domain 1 and further above the illustration of Domain 2. One can recognise that the mapping agent SEMA has a session/application interface (for receiving the QoS parameters), a resource interface (for querying the resource allocation mechanism) and an adaptation interface to contact an adaptation mechanism. Furthermore there is shown a status interface for querying the QoS status of the sessions.
- QoS profile definition: based on the information about the QoS parameters of the session-flow(s), the SEMA agent defines a QoS profile for the session-flows. The QoS profile can be composed by performance requirements of a session-flow, such as bit rate, bandwidth guarantee, tolerance to loss, delay and jitter, and can be enhanced by traffic characteristics, such as packet size, burstiness and duration. The value of the parameters can be specified in a quantitative form (e.g. ms or kb/s) and/or in a qualitative form (e.g. low or medium). The QoS profile definition may also involve the task of reformatting QoS parameters which have been transmitted by the source of the session and which may not be in the format as is the list of service classes such that the QoS parameters now are in accordance with the definitions of the service classes of the network. E.g. the source may define the QoS parameter "bitrate" as a specific number (e.in bits/s) while the service class list only has the categories "low", "medium" and "high" for the bitrate. In this case the QoS profile definition may check into which category the bitrate number indicated by the source falls, and it may then use the corresponding category for defining the QoS profile. In this manner it can be assured that the QoS profile can be directly compared with the QoS parameters in the service class list.
- QoS mapping mechanism: a QoS mapping mechanism receives as input the QoS profile containing the session requirements and the available service classes. It can in one embodiment also receive information about the available bandwidth of each class. Afterwards, the input information is used by the mapping method to map the session-flows into the appropriate network class of service;

The QoS mapping mechanism according to one embodiment encompasses three operational methods, namely, the Perfect Match, the Sub-perfect Match and the Hybrid Match, as well as a decision process to select the most suitable operational method. These four elements are described as follows:
- Operational Methods:
   **1. Perfect Match Method:** This method aims to assure the full QoS and bandwidth committed for each session-flow. This method assures that a single or multi-user session is mapped to a class of service that supports the same QoS assurances as required for each session-flow. When the suitable network class has not enough available bandwidth to assure, at least, the minimal packet loss rate of the session, the SEMA agent returns an error message (this error message can be used by an external adaptive mechanism, if available, to adapt the session to the network conditions).
   2. **Sub-perfect Match Method:** This method aims to assure the full bandwidth committed for each session-flow, while degrading the overall QoS assurance. This method maps all session-flows to a network class of service that supports QoS parameters different (with lower quality) than the described in the QoS profile. This method can be applied during the session setup or in periods of congestion of a network class, when a perfect match is not possible, while keeping the session full rate is of major importance. For instance, this method can be triggered by an external QoS adaptive mechanism after an error being returned to it by the perfect match method of the SEMA agent.
   3. **Hybrid Match Method**: This method aims to assure the full bandwidth committed for each session-flow, while degrading the QoS assurance of specific session-flows. This method is a combination of the two previously referred methods. The Hybrid Match method assures the best class of service to, at least, the session-flow with highest priority, and maps the other ones to a less suitable but appropriate class. Thus, a minimal service degradation is expected, since the bandwidth and the other QoS requirements of the most important session-flow(s) is(are) assured. Moreover, this method can be configured to identify the low priority session-flows, session-flows that are misplaced and/or session-flows with small audiences in the class of service (e.g. a multicast session with a small number of receivers). In a situation of congestion this method can be triggered by an external adaptive control mechanism to selectively map low priority session-flows of existing sessions, misplaced session-flows or session-flows with small audiences to another class. This option can be used to preserve the flows with highest priority and to accommodate the most important flows of incoming sessions.
- Decision Process: The decision about the usage of each of the above described methods can be selected by static and/or dynamic configuration. The former can be configured by the service provider according to its business model or to some agreement with its neighbours. The dynamic configuration can be done on-demand by an external protocol/mechanism, such as a QoS adaptive mechanism or an application (through their interfaces), or another SEMA agent (by means of a SEMA message). In these cases an indication is passed by an interface or by a message to inform which method must be used for a specific set of sessions. Alternatively, the dynamic configuration can be performed according to the session media type described by the signalling message or interface request.

The QoS mapping mechanism allows the transmission of the network level service characteristics to the session level, ensuring that each session (and each flow of a session) obtains the most suitable network level QoS. Moreover, these mechanisms provide the necessary flexibility to support different QoS models and protocols or mechanisms, e.g. by mapping the session level QoS requirements to the service classes in a network.

Referring to Fig. 2, it should be noted that according to one embodiment the session originating from the source may be a single-user or a multi-user session. For example a first user may be joining the session by connecting to a network agent in Domain 1, while another user may join the session by connecting to a network agent in Domain 3.

The individual mapping may thereby be different for the different network domains. This means that according to one embodiment the mapping is performed for each network domain individually, and/or also for each interdomain connection. E.g. the mapping in domain 1 may result in a perfect match so that the receiver connected to domain 1 receives the optimum service quality. On the other hand, for Domain 2 the available service class list may provide no service class which offers a perfect match. In this case, for the path through domain 2 there may be chosen a sub-perfect match (or a hybrid match), so that the user joining the session there receives less quality. The selection of the mapping method may depend on the individual domain. In this manner there is a high flexibility of the mapping. Also the mapping methods and their selection may be different for different network domains.

In this manner, single and multi-user services are supported in a flexible manner.

According to one embodiment the SEMA agent receives the QoS parameters for the session and transfers them into values which are in accordance with the ones used in the service classes list of the domain. This may e.g. involve transferring a distinct value like X bit/s into a more vague bitrate classification like "low" or "medium" or "high" as it is possibly used by the service classes list. The definition of the QoS profile in this manner separates the session level from the network level and ensures that the mapping is performed on the network level independent of the session level operations.

Moreover, by providing the distinct and defined service classes and a corresponding mapping procedure, the session mapping becomes independent of the QoS model and the underlying network infrastructure which allows the network operator to keep internals of the network infrastructure sufficiently opaque.

According to one embodiment the transmission of the QoS parameters associated with a session or its flows are transmitted to the received by some standard interface/application or protocol, and from the receiver these parameters are then forwarded to the SEMA agent. In this manner the method uses open interfaces allowing the easy interaction with different protocois/mechanisms. Moreover, in this manner and by carrying out the mapping on the network level there is no need to install additional modules in the end-hosts and the end-hosts do not need to participate in a QoS negotiation. Furthermore, the application coding does not need to be changed, which allows for an easy deployment, scalability and reduced complexity.

Since according to one embodiment all the QoS operations are local to a domain or between domains there is achieved minimal service degradation because for domains where higher QoS levels are possible they are actually used and the receivers connecting to these domains may profit from these higher QoS levels if each domain tries to map the session-flows to the best network class.

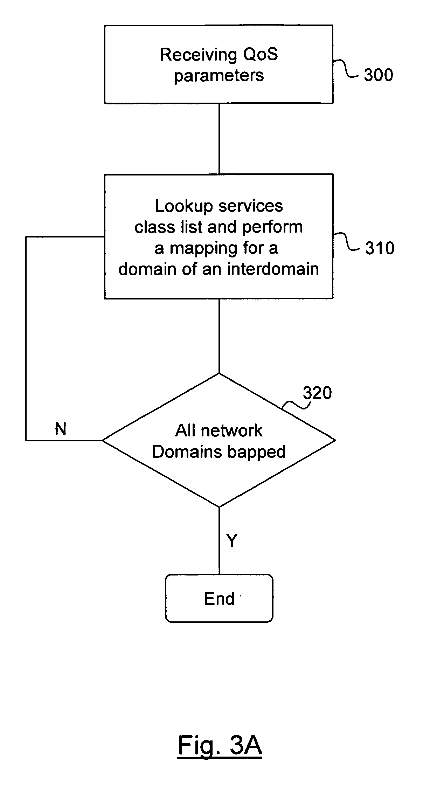

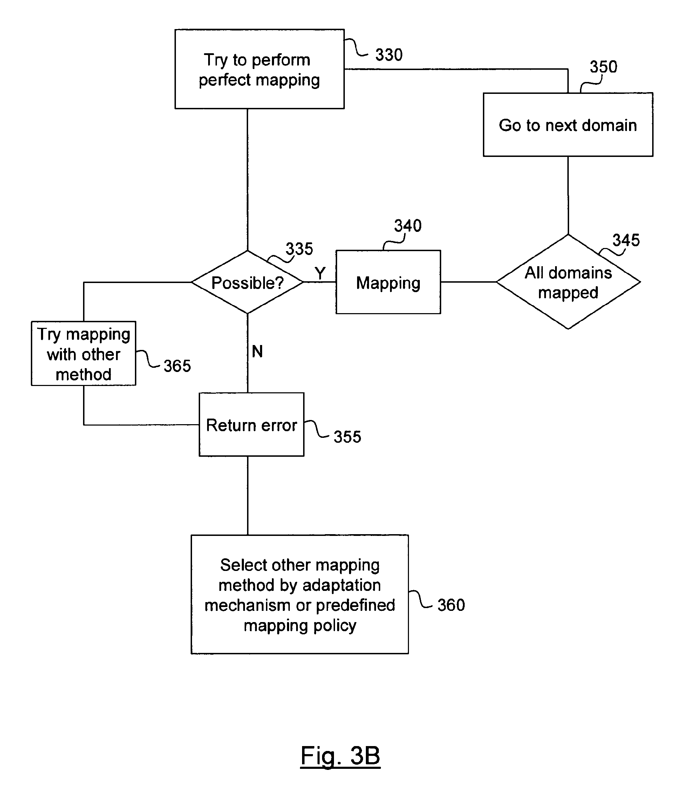

In the following the operation of a mapping method according to an embodiment of the invention will be described in connection with Fig. 3A. in operation 300 the mapping agent receives the QoS parameters. Then in operation 310 the service classes list for the network domain or the interdomain connection for which the mapping agent is responsible is looked up and a mapping is performed. Then in operation 320 it is checked whether the mapping has been carried out for all domains and/or interdomain connections along the path of the session. If not, the procedure continues by mapping the next domain.

The subsequent mapping of the domains may be carried out by at first informing the receiver about the QoS parameter which then in turn backwards along the session path informs the first mapping agent in the backward path, which then again informs the next mapping agent in the next domain towards the source, and so on. Once all mapping agents have been informed about the QoS parameters the actual mapping may start.

According to another embodiment the 'activation'of mapping agents in different networks or network domains may operate as follows. An agent near the receiver informs an agent near the source about the QoS parameters. This agent near the source then informs the next agent along the path in the direction towards the receiver, and this action is repeated until the receiver.

There may be a mapping agent in a domain for each incoming connections and for each outgoing connections, or there may be a centralised mapping agent which carries out the mapping for the whole domain. According to one embodiment, however, the mapping agents are located in the edge devices of a network domain, and each such mapping agent may carry out the mapping for incoming or outgoing sessions travelling through this edge device.

Fig. 3B illustrates a mapping operation (step 310 in Fig. 3A) according to one embodiment in somewhat more detail.

At first in operation 330 a perfect mapping is tried. If possible, this is carried out in operation 340, and it is checked (operation 345) whether the mapping was carried out for all domains. If not, the procedure turns to the next domain or interdomain link.

If a perfect match was not possible, an error code is returned (operation 355), and in operation 360 there is selected another mapping method which should be tried. This selection can be done by some external agent or by a predefined mapping policy which defines which mapping method to use next. Possibly this decision may also depend on the QoS parameters itself and/or on the available resources. In operation 365 then the next mapping method is tried.

In the following a further embodiment will be described in somewhat more detail.

This embodiment deals with QoS requirements being considered over heterogeneous environments which is a key issue for the next generation networks and single and multi-user service communications. Therefore, the session mapping (SEMA) mechanism is used to decide the appropriated network service class to be used for session-flows in each network along the session path.

The QoS profile defined by the mapping agent (SEMA agent) based on the QoS parameters specifying the session by the source describes the characteristics of the service requested by the user (wired or mobile) and is used to map application QoS requirements in the equivalent network service class in each QoS domain or between QoS domains along the session path. The QoS profile in one embodiment comprises at least five parameters: bit rate, bandwidth guarantee, packet loss, delay and jitter. The parameters can be descriptive and/or numerical. In the case of descriptive values, the bandwidth guarantee can be assigned as *yes* or *no*, where yes means that the session-flows require bandwidth assurances and no means the session only needs high probability of delivery. Furthermore, the values to loss, delay and jitter in one embodiment can be one the following: *very low, low, medium, high,* where very low corresponds to the most important service and high to the less important one. Any value that is not specified should be set to *not-specified.* The bit rate value should be nonnegative, measured in bytes per second.

The SEMA mechanism according to an embodiment makes use of the fact that the operators provide a network service class list to describe the specification of the available service classes supported in each of its domains or between domains to a resource allocation controller mechanism or protocol. The definition of the semantics and parameters of the list of network classes of service should follow the QoS profile values as explained before. If the QoS parameters as set by the source for defining the QoS requirements do not fit into this scheme, the SEMA agent may transfer them into values fitting into this scheme, e.g. by referring to a predefined which defines which numerical values of a bit rate are to be considered "low", which "medium", and so on.

Similarly other QoS parameters may be transferred so that there results a QoS profile which fits with the scheme of QoS values in the service class list.

Then the SEMA mechanism (the SEMA agent) compares the QoS parameters of the QoS profile of each session-flow and the network service class list (including available bandwidth for each class, when available), and chooses the network class that is most appropriated for the requested session-flow. For instance, a Perfect Match mapping is achieved when SEMA finds a suitable network class that assures the full QoS and bandwidth committed for all session-flows of that session. However, when the suitable network service class has not enough available bandwidth to assure the bandwidth committed for a session-flow, the mapping algorithm returns an error message. This error message can e.g. be used by an external protocol or mechanism (e.g. an adaptive control mechanism) to request the SEMA agent to perform the reallocation of the session or specific flows of a session into another network service class in order to assure, for instance, the full bandwidth committed for each session-flow. Moreover, a SEMA agent can be triggered by an external protocol/mechanism or another SEMA agent to use this method in order to reallocate the previously misplaced session-flows to the best network service class (e.g. when the network capability for a service class is available again).

The Sub-perfect Match method can be triggered by an external protocol or mechanism when the suitable network service class has not enough available bandwidth to assure, at least, the minimal packet loss rate for the most important session-flow. Furthermore, this method can also be used when the QoS levels supported by the available network service classes do not match the full QoS requirements of the session-flows. Thus, a possible reasoning for the SEMA agent is to start by checking from the remaining network service classes (since the one with the best match is not available) which ones have available bandwidth. Then, it uses the QoS profile of each session-flow to verify the bandwidth guarantee value (assured or not) and eliminates the service classes that do not ensure this requirement. After that, it compares the values of packet loss, delay and jitter of the remaining network classes, and selects the class that can provide lowest possible delay, loss and jitter. Since different classes may have different values for delay, loss and jitter, the SEMA agent selects the class that provides the best compromise, taking into account the importance attributed to the delay, loss and jitter parameters for that session. This operation method allocates all session-flows into an appropriate network class in order to avoid the packet re-ordering and/or the session blocking.

The Hybrid Match method assures the best network service class to, at least, the most important session-flows, and maps the others to a less suitable but appropriated class. For example, the most suitable network service has available bandwidth to guarantee the bandwidth committed only for the high priority flow of a session. Then, the SEMA agent is triggered by an external mechanism or protocol to map each one of the other flows into an appropriate network service class (the selection of an appropriate network service class may be based on the mapping process above described for the sub-perfect method). For instance, in an audio and video combination, it is more important to ensure an intelligible audio stream than a perfect video (the audio flow must be mapped to the best/perfect class, while the video flow can be mapped to another class that assures a lower quality level). Furthermore, a SEMA agent with this operation method can be triggered by an external protocol/mechanism or also by other SEMA agent to map, for instance, low priority flows or flows with small audience in a service class to a less suitable network service class. This operation method aims to avoid the session-flows blocking and to provide a minimal service degradation, since the bandwidth and the other QoS requirements of the most important session-flow(s) is(are) assured.

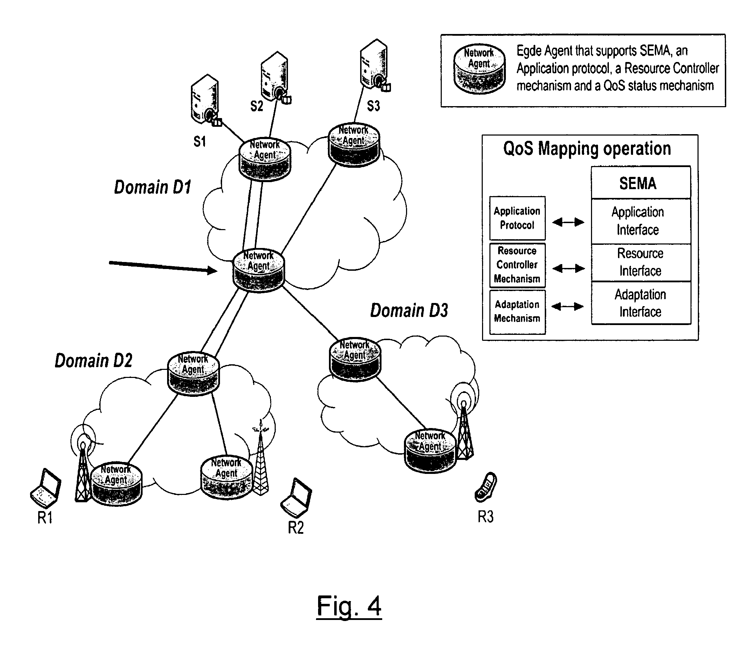

Figure 4 shows an embodiment of the SEMA agent operation scheme for QoS mapping in a generic scenario composed of three domains, with different QoS models (different service class lists) and three sources (S1, S2 and S3), each one of which generates one session with three flows. Each session-flow is defined, by the source, according to its importance and has different quality of level requirements. Furthermore, the receivers R1, R2 and R3 want to receive all session-flows of session S1, S2 and S3 respectively. This embodiment further provides the following:
• a protocol that triggers each SEMA agent along the session path. This protocol is further responsible to provide SEMA with the QoS profile (or the QoS parameters) of the sessions. An example of the QoS profile of each session is described in Table 1;
• an adaptation control mechanism;
• a resource allocation mechanism, which maintains information about the network service classes, including its available bandwidth, in a domain and between domains;

**Table I - Generic definition of the QoS Profile of the sessions**

| **Session** | **Assured bandwidth** | **Loss** | **Delay** | **Jitter** |
|---|---|---|---|---|
| S1 | No | Very Low | Very Low | Low |
| S2 | No | Low | Low | Medium |
| S3 | No | Medium | Medium | Medium |

In order to simplify the explanation, this example describes the use of the mapping mechanism in a specific place of the network, namely in the SEMA agent responsible for controlling the inter-domain link between *Domain D1* and *Domain D2* as well as the inter-domain link between *Domain D1* and *Domain D3.* The SEMA agent in this embodiment is part of a network agent at the edge of the network (or a network domain). Furthermore, this SEMA agent is linked to a network agent that also supports a resource allocation controller and an adaptation control mechanism (or to some network entity performing these functions).

In addition, Table 2 shows an example of the network services supported by the inter-domain links, where *D1-D2* represents the network services supported between Domain D1 and Domain D2, and *D1-D3* illustrates the network services supported between Domain D1 and Domain D3. This generic definition of the network services accommodates common QoS models, such as DiffServ and UMTS.

**Table 2 - Inter-domain network service class**

| **Link** | **Service Class** | **Assured bandwidth** | **Loss** | **Delay** | **Jitter** |
|---|---|---|---|---|---|
| D1-D2 | D1-D2_C1 | Yes | Very Low | Very Low | Very Low |
| | D1-D2_C2 | No | Very Low | Very Low | Low |
| | D1-D2_C3 | No | Low | Low | Medium |
| | D1-D2_C4 | No | Low | Medium | Medium |
| | D1-D2_C5 | No | Medium | Medium | High |
| | D1-D2_C6 | No | Not specified | Not specified | Not specified |
| D1-D3 | D1-D3_C1 | Yes | Very Low | Very Low | Very Low |
| | D1-D3_C2 | No | Medium | Medium | Medium |
| | D1-D3_C3 | No | Medium | High | Medium |
| | D1-D3_C4 | No | Not specified | Not specified | Not specified |

The QoS mapping is started, at the inter-domain network agent, when SEMA is triggered by the protocol (through the session/application interface) that furnishes the QoS profile of the session S1 addressed to R1. After that, the SEMA agent interacts with the resource allocation controller mechanism by querying it about the available network services and the available bandwidth of each service class towards R1, which informs the SEMA agent about the available network services between D1 and D2. Subsequently, the SEMA agent compares, one by one, the parameters of the QoS profile and the network services classes, and chooses the *D1-D2*_*C2* service class as the most suitable service class for the requested session-flows (the Perfect Match method is used with success since the full QoS and bandwidth committed for each session-flow are assured). Finally, the SEMA agent triggers the resource allocation controller mechanism to allocate the needed resources of all session-flows to the selected network service class.

In this embodiment the Hybrid Match method is performed when the SEMA agent is triggered by the protocol and receives the QoS profile of the session S2. Then, the SEMA agent requests to the resource allocation controller mechanism the available network service classes and the available bandwidth of each class towards R2. After that, the SEMA agent (which is in this case e.g. the network agent located at the edge of D1 which is connected to the edge of D2) selects (based on the Perfect Match method) *D1-D2_C2* as the most suitable network service class to be used by the session-flows. Subsequently, the SEMA agent triggers the resource allocation controller mechanism (not shown as distinct entity in Fig.3) and informs it about the selected network service class for each session-flow (starting always by the flows with highest priority). However, in this example one may assume that the bandwidth capacity of *D1-D2_C2* class is not enough to accommodate the less priority flows (e.g. due to a sudden change in the capacity of the network) and SEMA returns an error code. Due to this error, the SEMA agent may trigger the available QoS adaptation mechanism (through the adaptation interface shown in Fig. 3), which may end up triggering the Hybrid method of SEMA to try to map the less priority flows to a less suitable but appropriated service class, while keeping the most priority flows in *D1-D2_C2.* After this, the SEMA agent ends up selecting the *D1-D2_C3* network service class to accommodate the indicated session-flows, because it assures the bandwidth committed for the session-flows and supports medium delay transfers (value closest to the one required by the session). Finally, the SEMA agent triggers the resource allocation controller mechanism, informing it about the selected network service class to the less priority session-flows.

Furthermore, in this embodiment an example of the Sub-perfect method is accomplished when the SEMA agent is triggered by the protocol to map session S3, with the condition of keeping all session-flows together in the same class in order to avoid the packet re-ordering. After interacting with the resource allocation controller mechanism and selecting the suitable network service for the session-flows, namely the *D1-D3_C4* network class, the SEMA agent (executing the Perfect Match method) returns an error code, because this class has not enough available bandwidth to assure, at least, the minimal packet loss rate for the most important flow. This error code is then received by the adaptation control mechanism that triggers SEMA to reallocate all session-flows to a less suitable but appropriated service class, by using the Sub-perfect method. Finally, after selecting a new network service class, namely the *D1*-*D3*_*C5* network class, the SEMA agent requests the resource allocation controller mechanism to allocate resources of that class to all session-flows.

In addition, according to one embodiment an external protocol or mechanism can use a status interface of the SEMA agent to acquire information about the current QoS condition of some sessions. For instance, this information can be used to inform the end-user about the level of quality allocated to his sessions.

Referring to Fig. 4, on may note that the session map is different for sessions S1 and S2, also because these sessions have different QoS profiles. However, one may imagine the case that receivers R1 and R2 both receive, not a different session, but the same session (e.g. session S1). However, they receive this session through different paths, since they are connected to different network agents at the edge of D2. This means that at least somewhere inside D2 the path of the session has to branch.

In such a case the mapping inside domain D2 may be different for the session depending on whether it is received by receiver R1 or R2. E.g. for R1 the path may have no congestion so that a perfect match is possible, however, for the path towards R2 there may be some congestion inside the network D2 which causes a different mapping for the session as received by R2.

A similar different and individual mapping may be carried out in case of the branch not being the branch of the session path but the path of an individual flow. Also in this case the flow travelling along a first path may receive a different mapping that the flow travelling through a second path.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out a quality of service mapping as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the QoS mapping mechanisms as described before.

## Claims

1. A method for mapping quality of service in a session to be established between a source and a receiver though a network comprising a plurality of domains, whereas the session originating from a source is composed of one or more flows which together form the session, each flow having an associated set of quality of service parameters defining the quality of services requirement for each flow of said session, the network operator of each domain providing a services class list containing a list of a plurality of service classes and categorising the available service classes provided by said network operator for said domain with respect to the quality of service parameters defining the respective service classes, said method comprising:
receiving by a mapping agent in said network said set of quality of service parameters;
comparing the quality of service parameters defining the quality of services requirement for the individual flows with the service class list by said mapping agent; and mapping each flow by said mapping agent into a service class of the service classes list in accordance with a quality of service mapping policy, whereas based on said service mapping policy each flow is individually mapped to a suitable network class in accordance with the available service classes and the quality of service parameters of said individual flow, wherein
said session passes from said source to a receiver through multiple network domains having different available service classes, and
said mapping is performed for each domain and/or each interdomain connection along the path of a session independently such that for each network domain the mapping to a service class is performed individually.

2. The method of claim 1, whereas
said mapping policy tries to map the individual flows to respective service classes such that the quality of service requirements as defined in the quality of service parameters for each flow are fulfilled, and
if a mapping which fulfils all quality of service requirements is not possible, mapping flows of said session into a service class having less high quality of services parameters than required.

3. The method of one of claims 1 or 2, wherein
if a mapping which fulfils all quality of service requirements is not possible, based on the priority assigned to each flow of a session a flow having a higher priority is mapped to a higher service class and a flow having a lower priority is mapped to a service class having a lower priority, or
mapping all flows of the session to the same service class having less high quality of services parameters than required.

4. The method of one of claims 1 or 2, wherein
said mapping is further based on the available resources which are obtained by querying a resource controller in charge of assigning and monitoring available resources.

5. The method of one of the preceding claims, further comprising:
defining a quality of service profile by the mapping agent based on the quality of service parameters which were obtained from the source, said quality of service profile being such that it transfers the quality of service parameters into parameters which are in accordance with the parameters used in the list of service classes for classifying the available service classes.

6. The method of one of the preceding claims, wherein the quality of service parameters and/or the quality of service profile comprises one or more of the following:
bit rate, bandwidth guarantee, packet loss, delay and jitter.

7. The method of one of the preceding claims, further comprising:
if a perfect mapping based on the quality of service parameters into a service class of the services class list is not possible, returning an error code and forwarding it to an adaptation mechanism, and
receiving from said adaptation mechanism instructions as to which one of a plurality of available non-perfect mapping methods should be followed.

8. The method of one of the preceding claims, further comprising:
if a flow branches within a network into two or more different paths such that the flow is through said different paths received by different receivers, mapping said flow separately and independently for each path.

9. An apparatus for mapping quality of service in a session to be established between a source and a receiver though a network comprising a plurality of domains, whereas the session originating from a source is composed of one or more flows which together form the session, each flow having an associated set of quality of service parameters defining the quality of services requirement for each flow of said session, the network operator of each domain providing a services class list containing a list of a plurality of service classes and categorising the available service classes provided by said network operator for said domain with respect to the quality of service parameters defining the respective service classes, said apparatus comprising:
an interface for receiving information about said set of quality of service parameters;
a mapping unit for comparing the quality of service parameters defining the quality of services requirement for the individual flows with the service class list and for mapping each flow into a service class of the service classes list in accordance with a quality of service mapping policy, whereas based on said service mapping policy each flow is individually mapped to a suitable network class in accordance with the available service classes and the quality of service parameters of said individual flow, wherein
said session passes from said source to a receiver through multiple network domains having different available service classes, and
said mapping unit is provided to perform mapping for each domain and/or each interdomain connection along the path of a session independently such that for each network domain the mapping to a service class is performed individually.

10. The apparatus of claim 9, wherein
in each network domain there is provided a mapping unit to perform the mapping for this network domain.

11. The apparatus of claim 9 or 10, wherein
said mapping policy tries to map the individual flows to respective service classes such that the quality of service requirements as defined in the quality of service parameters for each flow are fulfilled, and
if a mapping which fulfils all quality of service requirements is not possible, mapping flows of said session into a service class having less high quality of services parameters than required.

12. The apparatus of one of claims 9 to 11, wherein
if a mapping which fulfils all quality of service requirements is not possible, based on the priority assigned to each flow of a session a flow having a higher priority is mapped to a higher service class and a flow having a lower priority is mapped to a service class having a lower priority, or
mapping all flows of the session to the same service class having less high quality of services parameters than required.

13. The apparatus of one of claims 9 to 12, wherein
said mapping is further based on the available resources which are obtained by querying a resource controller in charge of assigning and monitoring available resources.

14. The apparatus of one of claims 9 to 13, further comprising:
means for defining a quality of service profile by the mapping agent based on the quality of service parameters which were obtained from the source, said quality of service profile being such that it transfers the quality of service parameters into parameters which are in accordance with the parameters used in the list of service classes for classifying the available service classes.

15. The apparatus of one of claims 9 to 14, further comprising:
means for if a perfect mapping based on the quality of service parameters into a service class of the services class list is not possible, returning an error code and forwarding it to an adaptation mechanism, and
means for receiving from said adaptation mechanism instructions as to which one of a plurality of available non-perfect mapping methods should be followed.

16. The apparatus of one of claims 9 to 14, further comprising:
if a flow branches within a network into two or more different paths such that the flow is through said different paths received by different receivers, mapping said flow separately and independently for each path.

17. A computer program comprising computer executable code for enabling a computer to carry out a method according to one of claims 1 to 8.
